# EUROPEAN PATENT APPLICATION

(11) **EP 4 439 934 A1**
(43) Date of publication of application: **02.10.2024**
(21) Application number: 22923358.0
(22) Date of filing: 28.10.2022
(51) Int. Cl.: H02K 1/32, F04C 23/02

(54) **SELF-STARTING SYNCHRONOUS RELUCTANCE COMPRESSOR AND REFRIGERATION DEVICE SYSTEM**

(30) Priority: 26.01.2022 CN 202210092200
(71) Applicant: Gree Electric Appliances, Inc. of Zhuhai, Zhuhai, Guangdong 519031 (CN)
(72) Inventor: HU, Yusheng, Zhuhai, Guangdong 519031 (CN); CHEN, Bin, Zhuhai, Guangdong 519031 (CN); XIAO, Yong, Zhuhai, Guangdong 519031 (CN); SHI, Jinfei, Zhuhai, Guangdong 519031 (CN); LI, Xia, Zhuhai, Guangdong 519031 (CN)
(74) Representative: Appleyard Lees IP LLP
(86) International application number: PCT/CN2022/128252
(87) International publication number: WO 2023/142560

(57) **Abstract**

A self-starting synchronous reluctance compressor and a refrigeration device system. The self-starting synchronous reluctance compressor includes a cylinder (6), a flange (24), a muffling cover (9), and a motor (5). The motor (5) comprises a motor rotor (21). The flange (24) is connected to the cylinder (6), and the muffling cover (9) is arranged on the flange (24). A muffling cavity is formed between the muffling cover (9) and the flange (24), and at least one exhaust port (10) is disposed in the muffling cover (9). Multiple layers of rotor slots (11) are arranged on the motor rotor (21), and at least part of the rotor slots (11) axially penetrates the motor rotor (21). A total cross-sectional area of the at least part of the rotor slots axially penetrating the motor rotor (21) is *Sx,* and a total cross-sectional area of the at least one exhaust port (10) is *Ss,* and it is satisfied that *Sx*>*Ss.*

## Description

### CROSS-REFERENCE TO RELATED APPLICATIONS

The present application claims the priority of the Chinese patent application No. 202210092200.9, filed with China National Intellectual Property Administration on January 26, 2022 and entitled "SELF-STARTING SYNCHRONOUS RELUCTANCE COMPRESSOR AND REFRIGERATION DEVICE SYSTEM", the entire content of which is incorporated herein by reference.

### TECHNICAL FIELD

The present application relates to the field of motor technology, and in particular to a self-starting synchronous reluctance compressor and a refrigeration device system.

### BACKGROUND

A compressor for an air conditioner or a refrigerator has an intake pipe, an exhaust pipe and a housing, and a compression structure for compressing gas and a motor for driving the compression structure are arranged inside the housing. In order to ensure that refrigerant and gas may flow smoothly in the compressor, slots or holes need to be arranged on the motor to ensure that the refrigerant and the gas can pass through the motor. However, arranging slots or holes on the motor will cause the motor efficiency to be reduced, especially for a fixed-speed asynchronous compressor. A large number of squirrel-cage slots are formed on the asynchronous motor rotor, thus making space in the rotor not enough to arrange slots or holes for increasing a circulation area of the motor. The motor efficiency and the area of the slots or holes cannot be reconciled. Moreover, the speed of a conventional asynchronous motor is not a synchronous speed, and the speed is relatively low, and the area of the slots or holes on the motor will affect the circulation of the gas and refrigerant in the compressor, such that the compressor refrigeration capacity is not used preferably.

The compressors in the prior art have technical problems that the refrigerant and gas circulation is not smooth enough, which affects the energy efficiency of the compressor, therefore a self-starting synchronous reluctance compressor and a refrigeration device system are researched and provided in the present application.

### SUMMARY

Therefore, the technical problem to be solved by the present application is to overcome a defect in the prior art that the refrigerant and gas circulation in a compressor is not smooth enough, which affects an energy efficiency of the compressor, and the present application provides a self-starting synchronous reluctance compressor and a refrigeration device system.

In order to solve the above problems, the present application provides a self-starting synchronous reluctance compressor, including a cylinder, a flange, a muffling cover, and a motor. The motor includes a motor rotor. The flange is connected to the cylinder, and the muffling cover is arranged on the flange. A muffling cavity is formed between the muffling cover and the flange, and at least one exhaust port is disposed in the muffling cover. Multiple layers of rotor slots are arranged on the motor rotor, and at least part of the rotor slots axially penetrates the motor rotor, and the at least part of the rotor slots axially penetrating the motor rotor are defined as rotor through slots. A total cross-sectional area of the rotor through slots is *Sx,* and a total cross-sectional area of the at least one exhaust port is *Ss,* and it is satisfied that *Sx*>*Ss.*

In some embodiments, the motor rotor has a shaft hole, and cross-sectional areas of the rotor slots decrease successively from a center of the shaft hole toward outside along a radial direction of the rotor.

In some embodiments, the cylinder has an intake port, and a total cross-sectional area of the intake port is *Sg,* and *Sg*≤*Sx.*

In some embodiments, the motor further includes a motor stator, and the motor stator has a stator inner hole. The motor rotor is disposed in the stator inner hole, and an air-gap through slot is formed between an inner wall of the stator inner hole and a periphery of the motor rotor. A total cross-sectional area of the air-gap through slot is *Sq,* and it is satisfied that 1≤*Sx*/*Sq.*

In some embodiments, a housing is further included. The motor is disposed inside the housing. Multiple layers of squirrel-cage slots and squirrel-cage end ring are arranged on the motor rotor. The motor further includes a motor stator, and a groove or a cut edge is formed on a periphery of the motor stator, and a stator through slot is formed between the groove or the cut edge and an inner wall of the housing.

In some embodiments, the motor stator has a stator inner hole, the motor rotor is disposed in the stator inner hole, and an air-gap through slot is formed between an inner wall of the stator inner hole and a periphery of the motor rotor.

A total circulation area *S* of the motor is a sum of a total cross-sectional area *Sd* of the stator through slot and the total cross-sectional area *Sx* of the rotor through slots and a total cross-sectional area *Sq* of the air-gap through slot, and it is satisfied that 0.2≤*Sx*/*S*≤0.6.

In some embodiments, an intake pipe and an exhaust pipe are further included. The motor stator has a stator inner hole, the motor rotor is disposed in the stator inner hole, and an air-gap through slot is formed between an inner wall of the stator inner hole and a periphery of the motor rotor.

A sum of the total cross-sectional area *Sx* of the rotor through slots and a total cross-sectional area *Sq* of the air-gap through slot is greater than three times a cross-sectional area of the intake pipe or the exhaust pipe.

In some embodiments, multiple layers of squirrel-cage slots and squirrel-cage end rings are arranged on the motor rotor. Air circulates inside the multiple layers of rotor slots, the squirrel-cage slots each are distributed around an outer circumference of a corresponding rotor slot in the same layer, and the squirrel-cage slots are filled with conductive and non-magnetic materials and short-circuited by the squirrel-cage end rings.

In some embodiments, each rotor slot and a corresponding squirrel-cage slot in each layer are separated by a separating rib; each rotor slot and two squirrel-cage slots arranged at two ends thereof form a magnetic barrier layer; and at least two magnetic barrier layers are provided corresponding to one rotor pole.

In some embodiments, a ratio of the total cross-sectional area *Sx* of the rotor through slots to a total cross-sectional area *Sz* of the rotor slots is greater than 0.4.

In some embodiments, 1.6 *≤Sx*/*Ss≤4.8.*

In some embodiments, 1≤*Sx*/*Sg*≤3*.*

In some embodiments, the motor is a self-starting synchronous reluctance motor, and the compressor is a fixed-speed compressor.

The present application further provides a refrigeration device system, including a compressor, a condenser, an evaporator, and an expander. The compressor is the self-starting synchronous reluctance compressor of any one of the embodiments above.

The self-starting synchronous reluctance compressor and the refrigeration device system provided by the present application have following beneficial effects.

The present application provides the self-starting synchronous reluctance compressor, the compression structure and the motor for driving the compression structure are disposed in the compressor. The motor is the self-starting synchronous reluctance motor, whose circulation area is increased by the rotor slots in the electrode rotor, thereby solving the problem that the refrigerant and gas circulation in the compressor is not smooth enough, which affects the energy efficiency of the compressor. What's more, the heat dissipation of the motor can be improved, and the efficiency and service life of the motor can be enhanced. Moreover, the motor runs synchronously at a high speed and has a large refrigeration capacity.

### BRIEF DESCRIPTION OF THE DRAWINGS

FIG. 1 is a view showing an internal structure of a self-starting synchronous reluctance compressor of the present application;
FIG. 2 is a schematic view showing structures of a motor stator and a motor rotor of the present application;
FIG. 3 is a schematic view showing a structure of the motor rotor of the present application;
FIG. 4 is a curve graph showing a relationship between a ratio of a total cross-sectional area of rotor through slots of a motor to a total cross-sectional area of an exhaust port and a refrigeration capacity of the present application;
FIG. 5 is a curve graph showing effects of a ratio of the total cross-sectional area of the rotor through slots of the motor to a total cross-sectional area of an air-gap through slot of the present application on an efficiency of a conventional asynchronous motor and on an efficiency of the motor of the present application.

Reference signs are:
1. intake pipe; 2. exhaust pipe; 3. housing; 4. compression structure; 5. motor; 6. cylinder; 6a. upper cylinder body; 6b. lower cylinder body; 7a. upper cylinder cavity; 7b. lower cylinder cavity; 8. intake port; 8a. upper intake port; 8b. lower intake port; 9. muffling cover; 10. exhaust port; 11. rotor slot; 12. squirrel-cage slot; 13. squirrel-cage end ring; 14. stator through slot; 15. air-gap through slot; 16. housing upper cavity; 17. condenser; 18. evaporator; 19. expander; 20. motor stator; 21. motor rotor; 201. winding; 202. stator slot; 22. shaft hole; 23. rotation shaft; 24. flange; 25. separating rib.

### DETAILED DESCRIPTION OF THE EMBODIMENTS

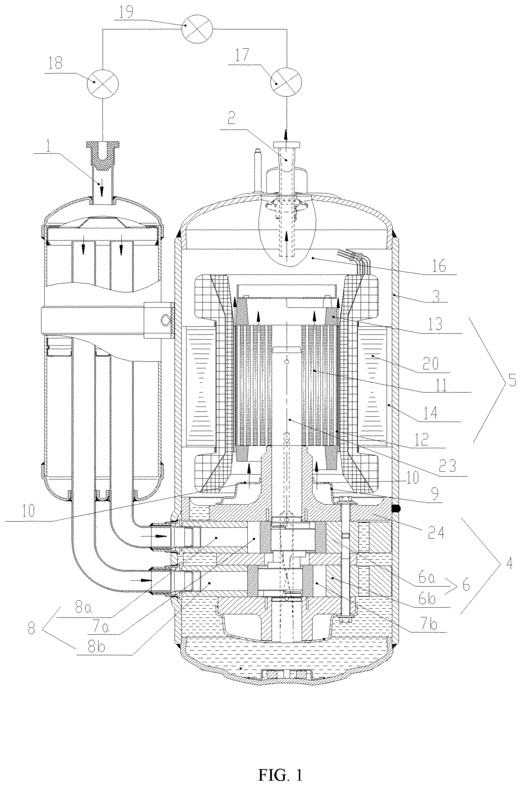

As shown in FIGS. 1 to 5, the present application provides a self-starting synchronous reluctance compressor, including a cylinder 6, a flange 24, a muffling cover 9, and a motor 5. The motor 5 includes a motor rotor 21. The flange 24 is connected to the cylinder 6. The muffling cover 9 is arranged on the flange 24, and a muffling cavity is formed between the muffling cover 9 and the flange 24. At least one exhaust port 10 is disposed in the muffling cover 9. Multiple layers of the rotor slots 11 are arranged in the motor rotor, and at least part of the multiple layers of rotor slots 11 axially penetrates the motor rotor. The at least part of rotor slots 11 axially penetrating the motor rotor are defined as rotor through slots. The total cross-sectional area of the rotor through slots is *Sx,* and a total cross-sectional area of the exhaust port 10 is *Ss,* and it is satisfied that *Sx >Ss.* In one of the embodiments, 1.6<, *Sx* /*Ss*≤4.8*.*

For the self-starting synchronous reluctance compressor provided by the present application, a compression structure and a motor for driving the compression structure are disposed in the compressor. The motor is the self-starting synchronous reluctance motor, whose circulation area is increased by the through slots in the rotor. The total cross-sectional area *Sx* of the rotor through slots is greater than the total cross-sectional area *Ss* of the exhaust port of the muffling cavity. Further, 1.6*≤Sx*/*Ss≤*4.8. Under the condition that the above range is met, not only the circulation area of the gas can be increased, thus improving the smoothness of circulation, but also the heat dissipation of the motor can be improved. The magnetic flux performance of the motor rotor itself will not be affected just because the area of the rotor through slots is excessive large, thereby guaranteeing the operation efficiency of the motor, and efficiently solving the problem that the refrigerant and gas circulation in the compressor is not smooth enough, which affects the energy efficiency of the compressor. What's more, the heat dissipation of the motor can be improved, and the efficiency and service life of the motor can be enhanced. Moreover, the motor runs synchronously at a high speed and has a large refrigeration capacity.

In some embodiments, the motor rotor has a shaft hole 22, and a circulation area of a rotor slot 11 relatively close to the shaft hole 22 is larger than a circulation area of a rotor slot 11 relatively far from the shaft hole 22, and the cross-sectional areas of the rotor slots 11 decrease successively from a center of the shaft hole toward outside along a radial direction of the rotor.

The self-starting synchronous reluctance compressor of the present application is described by taking FIG. 1 as an embodiment. The compressor has an intake pipe 1, an exhaust pipe 2 and a housing 3. A compression structure 4 for compressing gas and a motor 5 for driving the compression structure are arranged in the housing 3. The compression structure 4 has a double cylinder body (including an upper cylinder body 6a and a lower cylinder body 6b), and a cylinder cavity (including an upper cylinder cavity 7a and a lower cylinder cavity 7b). The gas enters the upper cylinder cavity 7a and the lower cylinder cavity 7b through the intake ports (including an upper intake port 8a and a lower intake port 8b) of the cylinder body respectively. After being compressed, the gas is discharged into the muffling cavity and then discharged into the housing through an exhaust port 10 of the muffling cavity. Multiple layers of rotor slots 11 and squirrel-cage slots 12, and squirrel-cage end rings 13 are arranged on the motor rotor 21, and part or all of the rotor slots 11 penetrate the motor rotor 21 in the axial direction. A groove or a cut edge is formed at a periphery of the motor stator 21 , and a stator through slot 14 is formed between the inner wall of the housing and the motor stator. The rotor 21 is disposed in the inner hole of the stator having multiple slots, and an air-gap through slot 15 is formed between the stator inner hole and the periphery of the rotor. The gas discharged from the muffling cavity passes through the rotor slots 11, the stator through slot 14, the air-gap through slot 15, and then enters a housing upper cavity 16, and finally is discharged through the exhaust pipe 2 and introduced into the condenser 17. The intake pipe 1 of the compressor is connected to an evaporator 18, and the evaporator 18 and the condenser 17 are connected through an expander 19, and finally a refrigeration cycle system is formed.

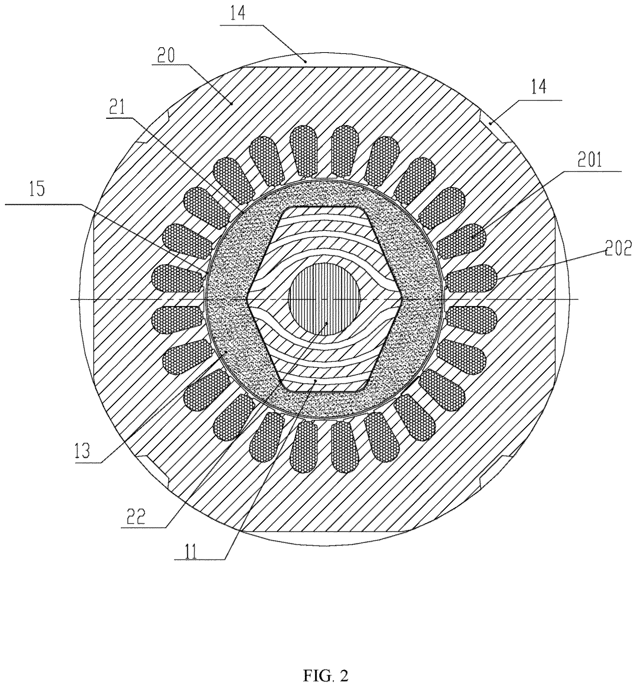

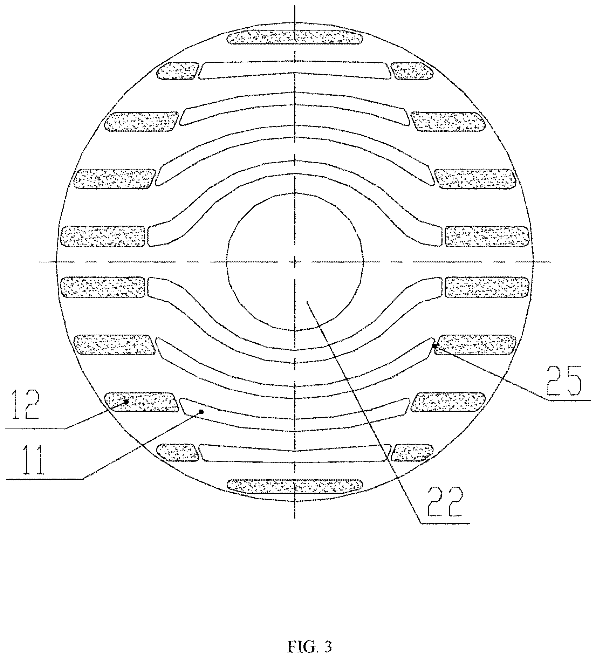

In some embodiments, the motor includes the motor stator 20 and the motor rotor 21. FIG. 2 is a schematic view showing structures of the motor stator and motor rotor. As shown in FIG. 2, the groove or the cut edge is formed on the periphery of the stator 20, and the stator through slot 14 is formed between the periphery of the stator 20 and the inner wall of the housing. A plurality of stator slots 202 for placing windings 201 respectively are formed on an inner side of the stator 20. Multiple layers of the rotor slots 11 and the squirrel-cage slots 12, and the squirrel-cage end rings 13 are arranged on the rotor 21. The rotor 21 is connected to the rotation shaft 23 of the compression structure through the shaft hole 22. Air circulates through the rotor slots 11. The squirrel-cage slots 12 are distributed on the outer circumferential portion of the rotor. The squirrel-cage slots 12 are filled with conductive and non-magnetic materials, and are short-circuited by the squirrel-cage end rings 13. FIG. 3 is a schematic view showing the structure of the rotor. As shown in FIG. 3, the rotor slots 11 and the squirrel-cage slots 12 on the rotor 21 are separated by the separating ribs 25 respectively. A rotor slot 11 and the squirrel-cage slots 12 arranged at two ends of the rotor slot form a magnetic barrier layer. At least two magnetic barrier layers are provided corresponding to one rotor pole.

In some embodiments, part or all of the rotor slots 11 axially penetrate the electrode rotor 21, and the part or all of rotor slots 11 axially penetrating the motor rotor are defined as the rotor through slots. The total cross-sectional area of the rotor through slots *Sx* is greater than the total cross-sectional area *Ss* of the exhaust port of the muffling cavity. Further, 1.6≤*Sx*/*Ss*≤4.8*.* Such arrangements can not only increase the circulation area of the gas and improve the smoothness of the circulation, but also improve the heat dissipation of the motor, and the magnetic flux performance of the motor rotor itself will not be affected due to the excessive cross-sectional area of the rotor through slots, thereby ensuring the operating efficiency of the motor, and effectively solving the problem that the refrigerant and gas circulation in the compressor is not smooth enough, which affects the energy efficiency of the compressor.

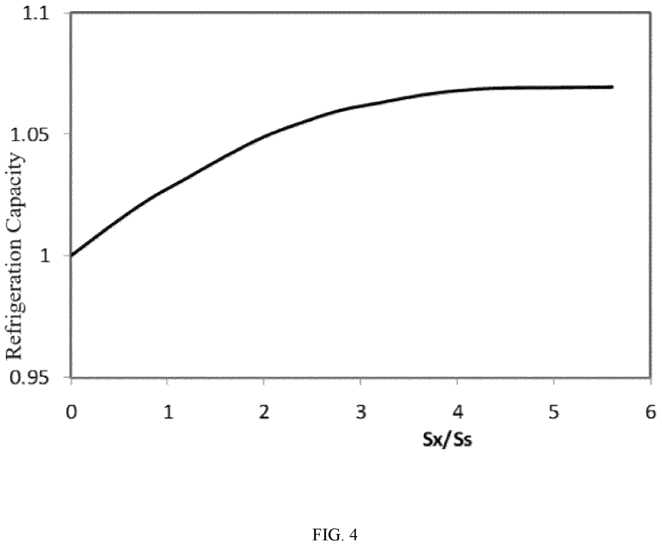

In some embodiments, the cylinder 6 has an intake port 8. The total cross-sectional area of the intake port 8 is *Sg,* and satisfies that *Sg*≤*Sx.* In some embodiments, 1≤*Sx*/*Sg*≤3*.* The compression structure 4 of the present application has at least one cylinder body, and the cylinder body has the intake port, and the total cross-sectional area *Sg* of all intake ports of the cylinder bodies is less than or equal to the total cross-sectional area *Sx* of the rotor through slots. In some embodiments, 1≤*Sx* /*Sg*≤3*.* The total cross-sectional area of the rotor through slots large enough can reduce the resistances of the motor to the gas and refrigerant circulations, and the gas and the refrigerant circulate smoothly, thereby increasing the refrigeration capacity of the motor. FIG. 4 is a curve graph showing a relationship between a circulation area and a refrigeration capacity of the motor rotor of the present application. As a proportion of the total cross-sectional area of the rotor through slots increases, the refrigeration capacity of the compressor increases, and when the proportion increases to a certain extent, the refrigeration capacity tends to remain unchanged.

In some embodiments, the motor further includes the motor stator 20, and the motor stator 20 has the stator inner hole. The motor rotor 21 is disposed in the stator inner hole, and the air-gap through slot 15 is formed between the inner wall of the stator inner hole and the periphery of the motor rotor 21. The total cross-sectional area of the air-gap through slot 15 is *Sq,* and it is satisfied that 1≤*Sx*/*Sq.* The rotor through slots, providing one of the main circulation areas of the motor, are limited through the structural dimensions above, such that the heat dissipation efficiency of the motor rotor can be enhanced when the gas and the refrigerant pass through the rotor through slots.

In some embodiments, the housing 3 is further included, and the motor is disposed inside the housing 3. The multiple layers of the rotor slots 11 and the squirrel-cage slots 12, and the squirrel-cage end rings 13 are arranged on the motor rotor 21. The motor 5 further includes the motor stator 20. The groove or the cut edge is formed on the periphery of the motor stator, and the stator through slot 14 is formed between the groove or the cut edge and the inner wall of the housing.

In some embodiments, the motor stator 20 has the stator inner hole, the motor rotor 21 is disposed in the stator inner hole, and the air-gap through slot 15 is formed between the inner wall of the stator inner hole and the periphery of the motor rotor 21.

The total circulation area *S* of the motor is a sum of the total cross-sectional area *Sd* of the stator through slot 14 and the total cross-sectional area *Sx* of the rotor through slots and the total cross-sectional area *Sq* of the air-gap through slot 15, and the ratio of the total cross-sectional area *Sx* of the rotor through slots to the total circulation area *S* of the motor satisfies 0.20≤*Sx*/*S*≤0.6.

In the present application, the ratio of the total cross-sectional area *Sx* of the rotor through slots to the total circulation area *S* of the motor (i.e., the sum of the total cross-sectional area *Sd* of the stator through slot and the total cross-sectional area of the rotor through slots and the total cross-sectional area *Sq* of the air-gap through slot) satisfies: 0.20≤*Sx*/*S*≤0.6*.* The appropriate total cross-sectional area of the rotor through slots ensures the rationality of the circulation area of the motor, and part of the gas and the refrigerant circulate through the air-gap through slot and stator through slot, thus the flow resistance is small, and each component of the motor can dissipate heat.

In some embodiments, the intake pipe 1 and the exhaust pipe 2 are further included. The motor stator 20 has the stator inner hole, and the motor rotor 21 is disposed in the stator inner hole. The air-gap through slot 15 is formed between the inner wall of the stator inner hole and the periphery of the motor rotor 21.

A sum of the total cross-sectional area *Sx* of the rotor through slots and the total cross-sectional area *Sq* of the air-gap through slot is greater than three times a cross-sectional area of the intake pipe or exhaust pipe.

In the present application, the total cross-sectional area of the rotor through slots, and the total cross-sectional area of the intake pipe or exhaust pipe satisfy the above relationships, and under the condition that the performance of the motor is ensured, the greater the total cross-sectional area of the rotor through slots, the better, thereby reducing the impact of insufficient circulation area of the motor on the performance of the compressor.

In some embodiments, the multiple layers of the rotor slots 11 and the squirrel-cage slots 12, and the squirrel-cage end rings 13 are arranged on the motor rotor 21. Air circulates inside the rotor slots 11. The squirrel-cage slots each are distributed around an outer circumference of a corresponding rotor slot 11 in the same layer, the squirrel-cage slots are filled with conductive and non-magnetic materials, and are short-circuited by the squirrel-cage end rings 13.

In some embodiments, the rotor slots 11 and the squirrel-cage slots are separated by the separating ribs 25 respectively, and each rotor slot and two squirrel-cage slots arranged at two ends thereof form a magnetic barrier layer, and at least two magnetic barrier layers are provided corresponding to one rotor pole. In the present application, the rotor slot and the squirrel-cage slots arranged at two ends thereof form one magnetic barrier layer, and multiple magnetic barrier layers may increase the magnetic resistance torque of the motor, thereby improving the efficiency of the motor.

In some embodiments, part or all of the rotor slots 11 penetrate the motor rotor axially, and the part or all of the rotor slots 11 penetrating the motor rotor axially are defined as the rotor through slots. The ratio of the total cross-sectional area *Sx* of the rotor through slots to the total cross-sectional area *Sz* of all rotor slots 11 is greater than 0.4. The circulation area of the motor is ensured in the present application by configuring the ratio of the total cross-sectional area *Sx* of the rotor through slots to the total cross-sectional area *Sz* of all rotor slots 11 to be greater than 0.4.

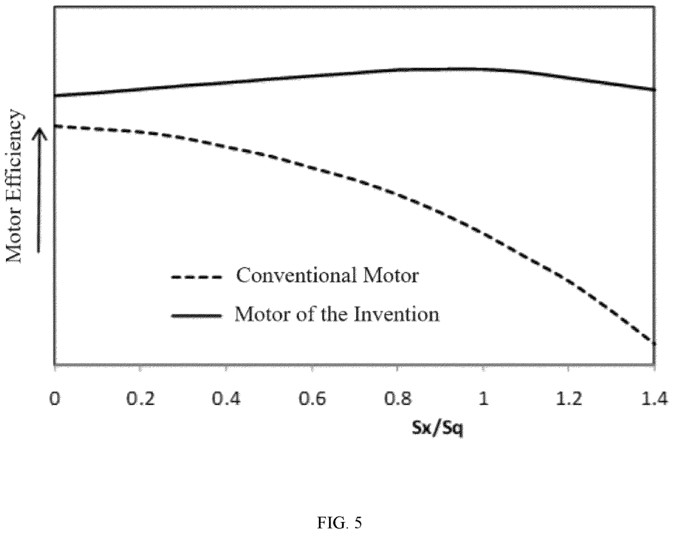

In some embodiments, the motor is a self-starting synchronous reluctance motor, and the compressor is a fixed-speed compressor. The motor of the present application is a self-starting synchronous reluctance motor, and in order to generate the reluctance torque and improve the efficiency of the motor, multiple layers of the rotor slots are arranged on the rotor, thereby increasing the circulation area of the motor. The cross-sectional area of the rotor slots has little relationship with the efficiency of the motor, which is different from the case of a conventional asynchronous the motor. For a conventional motor rotor, the addition of circulation holes will cause a decrease of the efficiency of the motor. FIG. 5 shows the effects of the circulation area of the rotor on the efficiency of the conventional asynchronous motor and on the efficiency of the motor of the present application. The larger the total cross-sectional area of the rotor through slots of the conventional asynchronous motor rotor is, the lower the efficiency of the motor is. However, the structural features of the motor rotor of the present application enable that the larger the rotor circulation area is, the better the heat dissipation is, and the higher the motor efficiency is too. In some embodiments, the compressor is a fixed-speed compressor, including the structure of the compressor of the above embodiment.

The present application also provides a refrigeration device system, including a compressor, a condenser, an evaporator and an expander. The compressor is the self-starting synchronous reluctance compressor of any of the above embodiments. The refrigerant used by the compressor includes at least one of HCFC refrigerant, HFC refrigerant, HC refrigerant, and CH₂F₂ refrigerant.

The present application provides the self-starting synchronous reluctance compressor, which has the compression structure and the motor for driving the compression structure. The motor is the self-starting synchronous reluctance motor, and the rotor slots on the rotor may increase the circulation area of the motor, thereby solving the problem that the refrigerant and gas circulation in the compressor is not smooth enough, which affects the energy efficiency of the compressor, and improving the heat dissipation of the motor, and increasing the efficiency and service life of the motor.

What described above are only some embodiments of the present invention but not intended to limit the present invention. Any modifications, equivalent substitutions and improvements made within the spirit and principles of the present invention shall be included in the protection scope of the present invention. What described above are some embodiments of the present invention. It should be noted that, for the ordinary skilled in the art, various improvements and modifications may be made without departing from the technical principles of the present invention, and these improvements and modification should also be regarded as the protection scope of the present invention.

## Claims

1. A self-starting synchronous reluctance compressor, comprising a cylinder (6), a flange (24), a muffling cover (9), and a motor (5), **characterized in that**:
the motor (5) comprises a motor rotor (21);
the flange (24) is connected to the cylinder (6), and the muffling cover (9) is arranged on the flange (24);
a muffling cavity is formed between the muffling cover (9) and the flange (24), and at least one exhaust port (10) is disposed in the muffling cover (9);
multiple layers of rotor slots (11) are arranged on the motor rotor (21), and at least part of the rotor slots (11) axially penetrates the motor rotor, and the at least part of the rotor slots (11) axially penetrating the motor rotor are defined as rotor through slots;
a total cross-sectional area of the rotor through slots is *Sx,* and a total cross-sectional area of the at least one exhaust port (10) is *Ss,* and it is satisfied that *Sx>Ss.*

2. The self-starting synchronous reluctance compressor according to claim 1, wherein:
the motor rotor (21) has a shaft hole (22), and cross-sectional areas of the rotor slots (11) decrease successively from a center of the shaft hole toward outside along a radial direction of the rotor (21).

3. The self-starting synchronous reluctance compressor according to claim 1, wherein:
the cylinder (6) has an intake port (8), and a total cross-sectional area of the intake port (8) is *Sg,* and *Sg≤Sx.*

4. The self-starting synchronous reluctance compressor according to claim 1, wherein:
the motor further comprises a motor stator (20), and the motor stator (20) has a stator inner hole;
the motor rotor (21) is disposed in the stator inner hole, and an air-gap through slot (15) is formed between an inner wall of the stator inner hole and a periphery of the motor rotor (21); and
a total cross-sectional area of the air-gap through slot (15) is *Sq,* and it is satisfied that 1≤ *Sx*/ *Sq.*

5. The self-starting synchronous reluctance compressor according to claim 1, further comprising a housing (3), wherein:
the motor is disposed inside the housing (3);
multiple layers of squirrel-cage slots (12) and squirrel-cage end ring (13) are arranged on the motor rotor (21);
the motor (5) further comprises a motor stator (20), a groove or a cut edge is formed on a periphery of the motor stator (20), and a stator through slot (14) is formed between the groove or the cut edge and an inner wall of the housing.

6. The self-starting synchronous reluctance compressor according to claim 5, wherein:
the motor stator (20) has a stator inner hole, the motor rotor (21) is disposed in the stator inner hole, and an air-gap through slot (15) is formed between an inner wall of the stator inner hole and a periphery of the motor rotor (21); and
a total circulation area *S* of the motor is a sum of a total cross-sectional area *Sd* of the stator through slot (14) and the total cross-sectional area *Sx* of the rotor through slots and a total cross-sectional area *Sq* of the air-gap through slot (15), and it is satisfied that 0.2≤*Sx*/*S≤*0.6.

7. The self-starting synchronous reluctance compressor according to claim 5, further comprising an intake pipe (1) and an exhaust pipe (2);
wherein the motor stator (20) has a stator inner hole, the motor rotor (21) is disposed in the stator inner hole, and an air-gap through slot (15) is formed between an inner wall of the stator inner hole and a periphery of the motor rotor (21); and
a sum of the total cross-sectional area *Sx* of the rotor through slots and a total cross-sectional area *Sq* of the air-gap through slot is greater than three times a cross-sectional area of the intake pipe or the exhaust pipe.

8. The self-starting synchronous reluctance compressor according to any one of claims 1 to 7, wherein:
multiple layers of squirrel-cage slots (12) and squirrel-cage end rings (13) are arranged on the motor rotor (21);
air circulates inside the multiple layers of rotor slots (11), the squirrel-cage slots each are distributed around an outer circumference of a corresponding rotor slot (11) in the same layer, and the squirrel-cage slots (12) are filled with conductive and non-magnetic materials and short-circuited by the squirrel-cage end rings (13).

9. The self-starting synchronous reluctance compressor according to claim 8, wherein:
each rotor slot (11) and a corresponding squirrel-cage slot (12) in each layer are separated by a separating rib (25); each rotor slot (11) and two squirrel-cage slots (12) arranged at two ends thereof form a magnetic barrier layer; and at least two magnetic barrier layers are provided corresponding to one rotor pole.

10. The self-starting synchronous reluctance compressor according to claim 8, wherein a ratio of the total cross-sectional area *Sx* of the rotor through slots to a total cross-sectional area *Sz* of the rotor slots (11) is greater than 0.4.

11. The self-starting synchronous reluctance compressor according to claim 1, wherein 1.6 ≤*Sx*/*Ss*≤4.8*.*

12. The self-starting synchronous reluctance compressor according to claim 3, wherein 1 <, *Sx*/*Sg*≤3*.*

13. The self-starting synchronous reluctance compressor according to any one of claims 1 to 12, wherein:
the motor is a self-starting synchronous reluctance motor, and the compressor is a fixed-speed compressor.

14. A refrigeration device system, comprising a compressor, a condenser, an evaporator, and an expander, **characterized in that** the compressor is the self-starting synchronous reluctance compressor of any one of claims 1 to 12.
